# EUROPÄISCHE PATENTSCHRIFT

(11) **EP 2 819 276 B1**
(45) Veröffentlichungstag und Bekanntmachung des Hinweises auf die Patenterteilung: **13.03.2019**
(21) Anmeldenummer: 14173638.9
(22) Anmeldetag: 24.06.2014
(51) Int. Cl.: H02K 15/04, H02K 3/18

(54) **Verfahren zur Herstellung einer Spule und Spule**
Method for manufacturing a coil and said coil
Procédé de fabrication d'une bobine et une telle bobine

(30) Priorität: 25.06.2013 DE 102013212087
(43) Veröffentlichungstag der Anmeldung: 31.12.2014
(60) Teilanmeldung: 19153028.6
(73) Patentinhaber: Breuckmann GmbH & Co. KG, 42579 Heiligenhaus (DE)
(72) Erfinder: Breuckmann, Michael, 42579 Heiligenhaus (DE); Bárdos, András, 42579 Heiligenhaus (DE); Breuckmann, Volker, 42579 Heiligenhaus (DE)
(74) Vertreter: advotec.

(56) Entgegenhaltungen:
- EP-A2- 2 387 135
- JP-A- 2005 186 092
- JP-A- 2006 158 024

## Beschreibung

Die Erfindung betrifft ein Verfahren zur Herstellung einer Spule sowie eine Spule für eine elektromechanische Maschine, insbesondere Elektromotor oder dergleichen, wobei die Spule durch Anordnung eines elektrischen Leiters ausgebildet wird, wobei der elektrische Leiter mit einer Mehrzahl von um eine Spulenlängsachse verlaufenden Windungen angeordnet wird, wobei die Windungen der Spule in einer Richtung der Spulenlängsachse fortlaufend angeordnet werden, wobei eine Querschnittsfläche des elektrischen Leiters im Verlauf der Windungen entlang der Spulenlängsachse konstant ausgebildet wird.

Derartige Spulen sind hinlänglich bekannt und werden regelmäßig in elektromechanischen Maschinen, wie beispielsweise Drehstrommaschinen oder auch Hubmagneten eingesetzt. Die Spule ist demnach ein elektrotechnisches Bauelement, welches zusammen alleine schon mit einem Spulenkern aus beispielsweise Eisen eine elektrotechnische Maschine ausbilden kann. Insbesondere bei Drehstrommaschinen, die als ein Antriebsmotor oder als ein Generator eingesetzt werden können, werden einen Eisenkern umgebende Spulen eingesetzt. Bei einer Drehstromsynchronmaschine können Spulen an einem Rotor als auch an einem Stator eingesetzt werden.

Üblicherweise wird bei derartigen elektromechanischen Maschinen eine größere Anzahl Spulen über einen Umfang eines Statorkörpers verteilt. Der Statorkörper ist dabei so ausgebildet, dass an seinem Umfang eine Reihe axialer Zähne ausgebildet sind, die einem Spulenkern entsprechen. Die Zähne sind durch jeweils Nuten voneinander beabstandet, in die jeweils Spulen eingesetzt werden. Eine Spule umgibt demnach einen Zahn entlang seiner Seitenflächen derart, dass die Spule die den Zahn begrenzenden Nuten jeweils hälftig ausfüllt. Die andere Hälfte der jeweiligen Nut wird von der am benachbarten Zahn angeordneten Spule ausgefüllt. Damit die Spulen nicht unmittelbar durch Wickeln am jeweiligen Zahn hergestellt werden müssen, weisen die Zähne jeweils parallele, geradförmige Seitenflächen auf, sodass die Spulen auf den jeweiligen Zahn einfach aufgeschoben werden können. Da sich die Zähne in einer radialen Richtung ausgehend von einer Rotationsachse der elektromechanischen Maschine erstrecken, sind folglich die Nuten bei geradförmigen Zähnen dann in einem Querschnitt konusförmig, in Richtung der Rotationsachse verjüngt, ausgebildet. Die Nuten werden dabei im Wesentlichen von den um die benachbarten Zähne verlaufenden Windungen der elektrischen Leiter der Spulen ausgefüllt. Eine derartige, sogenannte Zahnspulenwicklung wird regelmäßig bei permanent erregten Synchronmaschinen eingesetzt. Durch die Geometrie der Spulen ist es möglich diese auf vorgefertigten Spulenträgern herzustellen und dann anschließend auf die jeweiligen Zähne eines Stators aufzuschieben. Je nach Bauform der elektromechanischen Maschine können die Spulen jedoch auch unterschiedliche Geometrien oder Wickelformen aufweisen.

Ein Drehmoment der elektromechanischen Maschine kann dadurch erhöht werden, dass eine Leiterquerschnittsfläche der Spule relativ zu einer Querschnittsfläche einer Nut möglichst groß ist. Das heißt eine Drehmomentdichte kann dadurch erhöht werden, dass die Nut möglichst dicht mit Leitermaterial der Spule ausgefüllt ist. Ein Verhältnis von einer gesamten Leitermaterialquerschnittsfläche zur Nutquerschnittsfläche wird auch als sogenannter Nutfüllfaktor bezeichnet. Durch eine Erhöhung des Nutfüllfaktors wird eine Verbreiterung der Zähne zur Entlastung eines Magnetkreises oder ein flacherer Aufbau des Stators bei gleichbleibendem Drehmoment der elektromechanischen Maschine ermöglicht. Auch wird ein Wirkungsgrad der elektromechanischen Maschine durch eine Verbesserung des Nutfüllfaktors bei unveränderter Geometrie des Stators erhöht.

Der Erzielung eines möglichst hohen Nutfüllfaktors zur Verbesserung einer Energieeffizienz und eines kompakten Aufbaus der elektromechanischen Maschine steht eine kostengünstige und automatisierbare Fertigung der Spulen entgegen. So ist es aus dem Stand der Technik bekannt, derartige Spulen durch Wickeln von Runddrähten aus Kupfer oder Aluminium als elektrischer Leiter um einen, einen Zahn abbildenden Dorn herzustellen. Jedoch verbleibt hier immer ein nicht nutzbarer Zwischenraum zwischen den einzelnen Wicklungen des elektrischen Leiters. Ebenso eine notwendige Isolation, eine Drahteinführung und die Verteilung der Wicklungen wirken sich negativ auf den Nutfüllfaktor aus. Auch muss zwischen der vorgefertigten Spule und dem jeweiligen Zahn sowie den benachbarten Spulen ein ausreichend großes Spiel vorhanden sein, um unter Berücksichtigung von Fertigungstoleranzen eine Montage der Spule auf dem Zahn zu ermöglichen.

Weiter sind Herstellungsverfahren bekannt, bei denen die jeweilige Spule auf dem Zahn unmittelbar gewickelt wird. Dabei wird ein Runddraht einzeln durch die Nuten hindurch geführt, wozu wiederum ein bestimmter Freiraum erforderlich ist, der sich negativ auf den Nutfüllfaktor auswirkt. Eine weitere aus dem Stand der Technik bekannte Alternative ist eine aus einem Flachmaterial als elektrischer Leiter hergestellte Spule. Das Flachmaterial umgibt dabei den Zahn spiralförmig, wobei eine Querschnittsfläche des Leiters mit einem wachsenden Abstand vom Zahn aufgrund der Geometrie der Nut verkleinert ist. Dies ist jedoch nachteilig, da eine konstante Querschnittsfläche des Leiters auch eine konstante Stromdichte im Leiter gewährleistet. Bei der Herstellung einer Spule ist daher immer eine konstante Querschnittsfläche des Leiters anzustreben.

Aus der EP 2 387 135 A8 ist eine Spulengeometrie bekannt, mit der ein vergleichsweise hoher Nutfüllfaktor erzielt werden kann. Ein im Wesentlichen flacher, rechteckiger elektrischer Leiter ist hier in um einen Zahn verlaufenden Windungen angeordnet, wobei eine Querschnittsfläche des elektrischen Leiters im Verlauf der Windungen entlang einer Spulenlängsachse unverändert groß ausgebildet ist. Einer Anpassung an eine konusförmige Nut wird dadurch Rechnung getragen, dass eine Höhe und eine Breite der Querschnittsfläche des elektrischen Leiters kontinuierlich verändert ausgebildet sind, sodass eine veränderliche Querschnittsgeometrie bei einer konstanten Querschnittsfläche des elektrischen Leiters realisiert wird. So ist es möglich einen Nutfüllfaktor von über 90 % gegenüber einem Nutfüllfaktor von beispielsweise 70 % bei einer Wicklung aus Runddraht zu erzielen.

Nachteilig bei der vorbeschriebenen Spulengeometrie ist es jedoch, dass eine derartige Spule nur aufwendig durch Gießen hergestellt werden kann. Auch kann eine Spule nicht in der abschließenden Geometrie gegossen werden, da zwischen den Spulenwindungen eine für einen Guss ausreichend dicke Wandung einer Gießform vorgesehen werden muss. Weiter ist es erforderlich zunächst ein derartiges Spulenmodell herzustellen, welches zunächst zur Herstellung einer verlorenen Gießform genutzt werden kann. Nach dem Gießen der Spule, zum Beispiel aus Kupfer, ist ein mechanisches Entfernen eines Angusssystems und von Überläufen, die zum Beispiel zur Entlüftung oder zur Anbindung eines Vakuumsystems erforderlich sein können, durchzuführen. Ebenfalls müssen durch einen Gießprozess entstehende Grate an Formtrennungen entfernt werden. Daher ist ein Säubern und Entgraten des Abgusses der Spule erforderlich. Auch bei Verwendung einer Dauerform, zum Beispiel einer Druckgussform, wäre die Form aufgrund der Spulenform sehr komplex aufgebaut. Auch Formteile der Dauerform bzw. Druckgussform müssen aufgrund von Verschleiß kostenintensiv ersetzt werden. Das beschriebene Gießverfahren ist daher vergleichsweise aufwendig und aufgrund der gießtechnischen Probleme im Zusammenhang mit der Geometrie der Spule mit hohen Kosten verbunden. Auch kann der sich aus der Geometrie der Spule ergebende Vorteil eines verbesserten Nutfüllfaktors dadurch wieder zum Teil aufgehoben werden, dass eine elektrische Leitfähigkeit der Spule aufgrund des Gießens herabgesetzt ist. Eine Leitfähigkeit eines gezogenen Runddrahtes aus Reinkupfer beträgt beispielsweise circa 58 MS/m gegenüber einer gegossenen Spule mit circa 55 MS/m. Beim Gießen wird durch Lunker sowie durch eine Porosität des gegossenen Kupfermaterials ein wirksamer Leiterquerschnitt verringert und Oxide im Bereich der Korngrenzen des Kupfermaterials setzen die Leitfähigkeit herab.
Andere aufwändige Herstellungsverfahren einer Spule sehen ein Zusammensetzen und Löten bzw. Verschweißen von einzelnen Windungsabschnitten vor. Zum Beispiel ein Zerspanen oder Stanzen eines Materialrohlings zur Ausbildung von Windungsabschnitten, die zu einer Spule zusammengesetzt bzw. gefügt werden. Derartige Spulen sind daher mehrteilig ausgebildet, was jedoch hinsichtlich der elektrischen Eigenschaften der Verbindungen und des Herstellungsaufwandes nachteilig ist. Dokument JP 2005 186092 offenbart einen Verfahren zur Herstellung einer Spule für eine elektromechanische Maschine wobei eine Geometrie der Querschnittsfläche des elektrischen Leiters im Verlauf der Windungen entlang der Spulenlängsachse verändert ausgebildet ist. Aufgabe der Erfindung ist es daher ein Verfahren zur Herstellung einer Spule sowie eine Spule für eine elektromechanische Maschine vorzuschlagen, das bzw. die verbesserte elektrotechnische Eigenschaften ermöglicht bei dennoch einer gleichzeitig kostengünstigen Herstellung in großer Stückzahl.
Diese Aufgabe wird durch ein Verfahren mit den Merkmalen des Anspruchs 1, eine Spule mit den Merkmalen des Anspruchs 13 sowie einer elektromechanischen Maschine mit den Merkmalen des Anspruchs 14 gelöst.
Bei dem erfindungsgemäßen Verfahren zur Herstellung einer Spule für eine elektromechanische Maschine, insbesondere Elektromotor oder dergleichen, wird die Spule durch Anordnung eines elektrischen Leiters ausgebildet, wobei der elektrische Leiter mit einer Mehrzahl von um eine Spulenlängsachse verlaufenden Windungen angeordnet wird, wobei die Windungen der Spule in einer Richtung der Spulenlängsachse fortlaufend angeordnet werden, wobei eine Querschnittsfläche des elektrischen Leiters im Verlauf der Windungen entlang der Spulenlängsachse konstant bzw. unverändert groß ausgebildet wird, zur Ausbildung der Spule ein Umformen des elektrischen Leiters erfolgt, wobei eine Geometrie der Querschnittsfläche des elektrischen Leiters im Verlauf der Windungen entlang der Spulenlängsachse zumindest abschnittsweise kontinuierlich verändert ausgebildet wird, und wobei der elektrische Leiter in einem ersten Verfahrensschritt in eine Spulenvorform mit der Geometrie der Querschnittsfläche der Spule ausgebildet wird.
Dadurch, dass die Spule sowie die Geometrie der Querschnittsfläche des elektrischen Leiters durch ein Umformverfahren ausgebildet werden, kann die Spule besonders kostengünstig hergestellt werden. So ist es nicht wie bei einem Gießen erforderlich Angüsse oder Guss-Grate zu entfernen, da diese bei einem Umformverfahren regelmäßig nicht entstehen. Auch ein Verschweißen von Wicklungsabschnitten oder eine Herstellung mittels Zerspanen ist vergleichsweise arbeitsintensiver und damit kostenaufwändiger als die Anwendung eines Umformverfahrens. Weiter kann auch eine besonders leistungsfähige, einstückige Spule hergestellt werden, da eine elektrische Leitfähigkeit eines umgeformten Leitermaterials höher ist, als die eines in einer verlorenen Gießform gegossenen Leitermaterials. Auch eignet sich ein Umformverfahren besonders gut für eine Großserienfertigung, da nicht mit verlorenen Gießformen gearbeitet werden muss. Prinzipiell kommen zur Herstellung der einstückigen Spule alle geeigneten Umformverfahren in Betracht. Als ein Rohmaterial für den elektrischen Leiter kann ein Material verwendet werden, welches als ein Metall in reiner Form oder in Form einer Legierung bzw. Knetlegierung vorliegt. Das Leitermaterial kann dann derart umgeformt werden, dass die geometrische Gestalt der Spule, das heißt deren Wicklungsform, sowie die Geometrie der Querschnittsfläche des elektrischen Leiters der Spule erhalten wird. Im Unterschied zu einem beispielsweise Runddraht, der, wie aus dem Stand der Technik bekannt, zur Ausbildung einer Spule gewickelt und damit gebogen wird, kann bei dem Verfahren des Umformens der elektrische Leiter hinsichtlich seiner Querschnittsgeometrie ausgehend von der Spulenvorform umgeformt werden. Alternativ ist es auch möglich einen durch ein beliebiges Herstellungsverfahren bereits in der Spulenvorform ausgeformten Leiter zum Umformen zu verwenden. Bei den aus dem Stand der Technik bekannten, gewickelten Spulen erfolgt keine Ausbildung der Querschnittsgeometrie des elektrischen Leiters und der Spule in zwei Verfahrensschritten, wobei zumindest ein Verfahrensschritt mittels Umformen durchgeführt wird. Auch durch die regelmäßige Veränderung der Querschnittsgeometrie wird es möglich die Spule an eine, aus dem Stand der Technik bekannte, in einem Querschnitt konusförmige Nut optimal anzupassen, um so einen möglichst hohen Nutfüllfaktor zu erzielen. Die Spule verläuft dabei mit ihren Windungen entlang der Spulenlängsachse.

Unter der Spulenlängsachse wird hier eine Achse verstanden, um die sich der elektrische Leiter in Art einer Schraubenfeder herum windet. Der elektrische Leiter verläuft somit nicht mäanderförmig, sondern in Windungen. Die Windungen können dabei in einer horizontalen Windungsebene, relativ orthogonal zu der vertikal verlaufenden Spulenlängsachse so angeordnet sein, dass die Windungen jede beliebige geometrische Form in der horizontalen Windungsebene annehmen können. Bevorzugt werden die Windungen jedoch so in der horizontalen Windungsebene angeordnet, dass ein im Wesentlichen rechteckiger Querschnitt eines aus dem Stand der Technik bekannten Zahns einer elektromechanischen Maschine dicht umgeben werden kann. Unter einer konstanten bzw. unverändert groß ausgebildeten Querschnittsfläche des elektrischen Leiters wird eine Querschnittsfläche verstanden, die hinsichtlich ihrer Fläche um maximal 10%, bevorzugt um 5% variieren kann.

Der elektrische Leiter wird in dem ersten Verfahrensschritt in eine Spulenvorform mit der Geometrie der Querschnittsfläche der Spule umgeformt bzw. ausgebildet. Wenn die Windungen in der Spulenvorform der Spule so angeordnet sind, dass sie noch voneinander beabstandet sind, ist es auch möglich den elektrischen Leiter bzw. Windungszwischenräume mit einem Isolationsmaterial zu versehen. Alternativ ist es natürlich auch möglich für das Umformen ein Leitermaterial zu verwenden, welches bereits über eine Isolationsschicht verfügt bzw. eine elektrisch nicht leitende Oberfläche aufweist.

Die Geometrie der Querschnittsfläche des elektrischen Leiters ist gesamten Verlauf der Windungen entlang der Spulenlängsachse kontinuierlich ausgebildet. Im Gegensatz zu einer abschnittsweisen Änderung der Geometrie der Querschnittsfläche des elektrischen Leiters wird demnach die Geometrie derart kontinuierlich verändert ausgebildet, sodass keine erkennbaren Versprünge im Verlauf der Windungen um die Spulenlängsachse herum existieren. Somit wird es möglich einen noch weiter verbesserten Nutfüllfaktor zu erzielen.

Weiter ist das Verfahren nicht auf die Ausbildung einer einzelnen Spule beschränkt. So kann mittels des Verfahrens ein Spulenverbund zusammenhängender, mit einem durchgehenden elektrischen Leiter verbundener, einzelner Spulen ausgebildet werden. Eine benachbarte Spulen verbindende Leiterbrücke kann dann zusammen mit den Spulen durch Umformen des elektrischen Leiters ausgebildet werden. Die Spulen müssen dann im Rahmen einer Montage nicht mehr miteinander verbunden werden. Auf eine Verbindung von Spulen durch beispielsweise Verschweißen kann verzichtet werden.

Nachfolgend dem ersten Verfahrensschritt kann der elektrische Leiter in einem weiteren Verfahrensschritt in eine Spulenendform der Spule umgeformt werden. Die Spule kann dann in ihre Spulenvorform in Richtung der Spulenlängsachse derart zusammengedrückt bzw. gestaucht werden, dass zwischen den einzelnen Windungen der Spule im Wesentlichen kein Luftzwischenraum verbleibt. Auch hier ist es selbstverständlich noch möglich durch Aufbringen eines Pressdrucks in axialer Richtung der Spulenlängsachse auf die Spule in der Spulenendform eine verbesserte Verdichtung der Windungen zu erzielen, ohne dass eine eventuell vorhandene Isolationsschicht zwischen den Windungen beschädigt wird. Ein Nutfüllfaktor kann so noch weiter erhöht werden. Bei dem weiteren Verfahrensschritt kann aber auch die Spulenvorform so umgeformt werden, dass erst jetzt die Spulenform erhalten wird. Die Spulenvorform kann dann durch ein beliebiges Herstellungsverfahren ausgebildet sein, mittels dem der elektrische Leiter hinsichtlich der Geometrie seiner Querschnittsfläche zwar ausgebildet wurde, jedoch noch nicht in Form einer Spule mit in sich geschlossenen Windungen ausgebildet ist. Der elektrische Leiter wird dann erst durch den weiteren Verfahrensschritt von der Spulenvorform in eine Spule bzw. Spulenform umgeformt. Somit ist es dann auch möglich den elektrischen Leiter mit der Geometrie der Querschnittsfläche unter gegebenenfalls vereinfachten Bedingungen herzustellen, da dann in dem ersten Verfahrensschritt noch keine Spulenform, d. h. in sich geschlossene Windungen, ausgebildet werden müssen.

Die Spule ist durch das Verfahren besonders einfach herstellbar, wenn die Spule bzw. der elektrische Leiter der Spule in dem ersten Verfahrensschritt mittels Umformen eines Halbzeugs ausgebildet wird. Als ein Halbzeug kann beispielsweise ein Draht verwendet werden. Dabei ist es zunächst unerheblich welche Geometrie eine Querschnittsfläche des Drahts hat. Es können Drähte mit runder, quadratischer oder auch rechteckiger Querschnittsfläche im Rahmen des Verfahrens eingesetzt werden. Vorzugsweise weist das als Ausgangsprodukt für das Verfahren verwendete Halbzeug eine Querschnittsfläche mit einer Geometrie auf, die der späteren Geometrie der Querschnittsfläche des elektrischen Leiters angenähert ist. Das Halbzeug selbst kann durch Gießen, Ziehen, Walzen oder Pressen oder andere geeignete Verfahren hergestellt sein.

Das Umformen des elektrischen Leiters bzw. das Umformen der Geometrie der Querschnittsfläche des elektrischen Leiters kann prinzipiell mittels eines beliebigen, geeigneten Umformverfahrens erfolgen, vorzugsweise durch Walzen, Freiformen, Gesenkformen, Zugumformen und/oder Biegen. Auch ist eine Kombination von mehreren Umformverfahren zur Herstellung der Spule möglich. So kann beispielsweise zunächst ein Biegen des Ausgangsmaterials in eine Vorform vorgesehen sein, wobei eine abschließende Ausbildung der Geometrie der Querschnittsfläche des elektrischen Leiters durch Gesenkformen erfolgen kann. Dabei können für den Abschnitt des elektrischen Leiters eigens ausgebildete Formen verwendet werden. Das Gesenkformen bzw. Gesenkschmieden des elektrischen Leiters kann durch ein Längsschmieden des elektrischen Leiters erfolgen. Weiter kann das Umformen oder einzelne Arbeitsschritte des Umformens mittels Warmumformen, Halbwarmumformen und/oder Kaltumformen erfolgen. Gleiches trifft für einen elektrischen Leiter zu, der in den ersten Verfahrensschritt durch Gießen als ein Halbzeug ausgebildet wurde. Dieser Leiter bzw. dieses Halbzeug kann ebenfalls, wie vorstehend ausgeführt Umgeformt werden.

Insbesondere das Gesenkformen bzw. Gesenkschmieden des elektrischen Leiters kann abschnittsweise erfolgen. Dann ist es möglich die Spule durch Umformen voneinander nachfolgenden Abschnitten des elektrischen Leiters herzustellen. Im Gegensatz zu einer in einem Arbeitsschritt in einer Gesenkschmiedeform hergestellten Spule, kann dann eine Vielzahl von Gesenkformen für die jeweiligen Abschnitte des Umformens des elektrischen Leiters bzw. der Spule verwendet werden. Derartige Gesenkformen sind vergleichsweise einfacher herzustellen und zu handhaben.

Vor dem Ausbilden der Geometrie der Querschnittsfläche des elektrischen Leiters durch Umformen kann die Spule durch Wickeln des Halbzeugs auf einem Dorn vorgeformt werden. Beispielsweise kann, wenn als ein Halbzeug ein Draht verwendet wird, der Draht um einen Dorn gewickelt werden, um eine Vorform der Spule zu erhalten. Der Dorn kann dann bereits eine ähnliche geometrische Gestalt wie der spätere Zahn der elektromechanischen Maschine aufweisen, den die fertige Spule dann umgibt. Das Wickeln des Halbzeugs auf den Dorn kann mittels einer Federwickelmaschine erfolgen, da die Windungen der Spule in Art von wendelförmigen Windungen einer Schraubenfeder angeordnet werden. So ist es möglich in einem ersten Verfahrensschritt vor einem Umformen der Geometrie der Querschnittsfläche des elektrischen Leiters die Windungen der Spule durch Wickeln vorzuformen. Das Verfahren kann dadurch arbeitsteilig und damit wirtschaftlich durchgeführt werden.

Erfindungsgemass wird in dem ersten Verfahrensschritt der elektrische Leiter mittels Gießen ausgebildet. Der elektrische Leiter kann dann erst in den weiteren Verfahrensschritt durch Umformen in die Spulenform bzw. Spulenendform der Spule gebracht werden. Zwar weist die Ausbildung des elektrischen Leiters in dem ersten Verfahrensschritt durch Gießen als ein Halbzeug mit der Spulenvorform die zuvor beschriebenen Nachteile auf, jedoch kann eine Gießform für den Leiter dann besonders einfach und damit kostengünstig ausgebildet werden, da der elektrische Leiter nicht in der Spulenform, d. h. mit geschlossenen Windungen, gegossen werden muss. Der elektrische Leiter ist dann bereits als ein Draht bzw. Vierkantdraht mit einer der Spule angenäherten Geometrie ausgebildet, wodurch er durch Gießen auch in größeren Stückzahlen kostengünstig herstellbar ist. Auch kann auf eine Herstellung mit einer verlorenen Gießform verzichtet und eine Dauerform verwendet werden. Durch ein Gießen in eine Dauerform kann eine Nachbearbeitung von Oberflächen des Leiters gegebenenfalls vermieden sowie eine hohe elektrische Leitfähigkeit der Spule erzielt werden. Bei einem Umformen in dem weiteren Verfahrensschritt ist es dann noch möglich den gegossenen Leiter ergänzend zu verdichten bzw. eine Oberfläche des Leiters plastisch nachzuverformen.

Insbesondere kann bei dem Gießen die Geometrie der Querschnittfläche des elektrischen Leiters im Wesentlichen vollständig ausgebildet werden. So ist eine nachträgliche Ausbildung der Geometrie der Querschnittfläche bei dem nachfolgenden Umformen nicht mehr erforderlich. Prinzipiell wird dann durch das Gießen des Leiters ein Halbzeug bzw. Halbfabrikat hergestellt, aus dem die Spule durch Umformen ausgebildet werden kann.

Vorteilhaft kann die Spulenvorform so ausgebildet werden, dass sie sich im Wesentlichen in einer Formebene erstreckt. Die Spulenvorform kann dann mit einer Dauerform gegossen werden, die lediglich eine einzige Formtrennebene aufweist. Insbesondere kann vorgesehen sein, dass die Spulenvorform zu großen Teilen eben bzw. flach ausgebildet ist. Bögen bzw. Rundungen von Windungen zur Anordnung der Spule an einer Kante eines Zahns können dann auch bereits ausgeformt sein. Ein Biegen des Leiters in diesen biegetechnisch kritischen Bereichen ist dann nicht mehr erforderlich.

In dem weiteren Verfahrensschritt kann ein geradförmiger, paralleler Windungsabschnitt einer Windung des elektrischen Leiters relativ bezogen auf eine Längsachse des Windungsabschnittes um 180° verdreht werden, derart, dass der Windungsabschnitt plan bzw. eben ausgebildet wird. Das Umformen in dem weiteren Verfahrensschritt erfolgt dann derart, dass der Windungsabschnitt einfach verdreht wird. Wenn das Verdrehen um 180° der Längsachse des Windungsabschnittes erfolgt kann eine vollständige, geschlossene Windung der Spule ausgebildet werden. Für ein Verdrehen können vorzugsweise lange Windungsabschnitte genutzt werden, sodass vergleichsweise kurze Windungsabschnitte nicht umgeformt werden müssen.

Wenn dann in der Formebene benachbarte Windungsabschnitte jeweils um ihre Längsachse verdreht werden, kann die Spule besonders einfach ausgebildet werden. Wenn weiter die benachbarten Windungsabschnitte jeweils gleichartig um 180° verdreht werden, kann eine Spule mit einer Vielzahl von Windungen erhalten werden. Beim Gießen der Spulenvorform kann dann der jeweilige Windungsabschnitt schon so ausgeformt werden, dass das Verdrehen des jeweiligen Windungsabschnittes eine plane bzw. ebene Ausbildung des Windungsabschnittes in der Spulenendform bewirkt. D. h., der betreffende Windungsabschnitt ist in der Spulenvorform dann schon um 180° verdreht ausgebildet, sodass bei dem Umformen durch ein Verdrehen um 180° entgegen der ausgebildeten Verdrehung in der Spulenvorform die gewünschte Gestalt des Windungsabschnittes in der Spulenendform erhalten wird.

Der elektrische Leiter der Spulenvorform kann in einem zweiten Verfahrensschritt nach dem Umformen bzw. Ausbilden der Spulenvorform mit einem Isolationsmaterial beschichtet werden. Diese Beschichtung kann beispielsweise durch Aufbringen eines Isolierlackes, durch einen CVD- oder einen PVD-Prozess erfolgen. Insbesondere dann ist es notwendig, dass die Spulenvorform einen Windungsabstand aufweist. Alternativ kann das Isolationsmaterial auch in Form einer Isolationsschicht zwischen oder auf den Windungen der Spule angeordnet werden. Das Isolationsmaterial kann dann beispielsweise ein folienartiger Kunststoffstreifen sein.

Vorteilhaft kann das Umformen in zumindest einem Verfahrensschritt durch Halbwarmumformen oder Warmumformen eines Leitermaterials des elektrischen Leiters erfolgen, wobei als Leitermaterial vorzugsweise Kupfer, eine Kupferlegierung, Aluminium, eine Aluminiumlegierung, Silber oder eine Silberlegierung verwendet werden kann. Grundsätzlich können hier alle geeigneten Materialien als Leitermaterial Verwendung finden. Zumindest erfolgt das Umformen des Leitermaterials dann unterhalb einer Schmelztemperatur des Leitermaterials, wobei beim Warmumformen die Temperatur des Leitermaterials oberhalb einer Rekristallisationstemperatur des Leitermaterials liegen kann. Das Leitermaterial kann vor dem Umformen auf die entsprechende Temperatur erwärmt werden, wobei auch ein beheiztes bzw. vortemperiertes Umformwerkzeug verwendet werden kann. Durch das Warmumformen kann das Leitermaterial besonders leicht verformt werden.

Auch kann eine Wärmebehandlung des elektrischen Leiters vor, während und/oder nachfolgend dem Umformen durchgeführt werden. Mittels der Wärmebehandlung können Spannungen im Leitermaterial oder in einem verwendeten Halbzeug zur Herstellung der Spule abgebaut werden. Beispielsweise kann nach einem Wickeln des Halbzeugs um einen Dorn, also vor einem Umformen einer Geometrie der Querschnittsfläche des elektrischen Leiters, eine derartige Wärmebehandlung vorgesehen sein. Auch kann die Wärmebehandlung nach dem Umformen durchgeführt werden, wenn die Spulengeometrie noch nicht abschließend hergestellt wurde. Durch die Wärmebehandlung kann eine durch das Umformen eventuell erfolgte leichte Minderung der elektrischen Leitfähigkeit wieder rückgängig gemacht werden. Eine bei der Wärmebehandlung entstehende Oxidschicht kann für eine notwendige elektrische Isolation wischen einzelnen Wicklungen genutzt werden.

In einer bevorzugten Ausführungsform des Verfahrens kann die Geometrie der Querschnittsfläche rechteckig oder trapezförmig ausgebildet werden. Beispielsweise kann die Geometrie der Querschnittsfläche als rechtwinkliges Trapez ausgebildet werden. Somit können größere Luftspalte zwischen den Windungen der Spule, wie sie bei aus Runddrähten ausgebildeten Spulen bekannt sind, vermieden werden, wodurch sich ein weiter verbesserter Nutfüllfaktor ergibt.

Das Gießen im ersten Verfahrensschritt oder das Umformen kann derart erfolgen, dass relativ zur Spulenlängsachse eine in axialer Richtung der Spulenlängsachse ausgebildete Höhe der Querschnittsfläche des elektrischen Leiters entlang einer Richtung einer Erstreckung eines elektrischen Leiters im Verlauf der Windungen der Spulenlängsachse abnimmt, und eine in radialer Richtung orthogonal zu der Spulenlängsachse ausgebildete Breite der Querschnittsfläche des elektrischen Leiters in der Richtung der Erstreckung zunimmt. Die Änderung der Höhe und der Breite der stets gleichgroßen Querschnittsfläche des elektrischen Leiters erfolgt gleichzeitig. Das heißt in einer durch die Querschnittsfläche des elektrischen Leiters verlaufenden Querschnittsebene erfolgt in einer Richtung eines Verlaufs des elektrischen Leiters eine Änderung der Höhe der Querschnittsfläche und gleichzeitig eine Änderung der Breite der Querschnittsfläche. So weist die Höhe der Querschnittsfläche in der Querschnittsebene eine beispielsweise steigende, lineare Funktion auf, wobei die Breite der Querschnittsfläche eine gleichzeitig fallende, lineare Funktion aufweist. Damit ist gewährleistet, dass bei abschnittsweise oder stetig veränderter Höhe und Breite der Querschnittsfläche des elektrischen Leiters die Querschnittsfläche immer gleich groß bzw. konstant groß ausgebildet ist. Dabei kann, je nach Ausbildung des Stators, bei geradförmigen Zähnen des Stators die Höhe der Querschnittsfläche in einer auf eine Rotationsachse des Stators zulaufenden Richtung vergrößert, und bei geradförmigen Nuten des Stators die Höhe der Querschnittsfläche in der auf eine Rotationsachse des Stators zulaufenden Richtung verkleinert sein.

Besonders vorteilhaft ist es, wenn eine Breite der Querschnittsfläche größer als eine Höhe ausgebildet wird, wobei bevorzugt die Breite zumindest um einen Faktor 2 größer ausgebildet werden kann als die Höhe. Beispielsweise kann eine Höhe des elektrischen Leiters 4 mm betragen, wobei dann eine Breite in einer gleichen bzw. übereinstimmenden Querschnittsebene 8 mm betragen kann. Mit dem aus dem Stand der Technik bekannten Gießverfahren ist es lediglich wirtschaftlich sinnvoll möglich flache Leiterquerschnittsflächen mit einer Höhe von nicht kleiner als 0,7 mm auszubilden. Durch das Gießen und/oder Umformen kann auch eine Höhe der Querschnittsfläche des elektrischen Leiters von < 0,7 mm, bevorzugt < 0,35 mm ausgebildet werden. Die bei der Herstellung derartiger Geometrien im Gießverfahren mit komplexen Formen auftretenden Probleme, wie beispielsweise Lunker, Porositäten, Kaltläufe, Einschlüsse oder dergleichen, müssen bei der Anwendung des Umformverfahrens bzw. kombinierten Gieß-/Umformverfahrens nicht mehr berücksichtigt werden.

Die Spule kann zumindest Abschnittsweise zum formschlüssigen Umfassen eines Vorsprungs oder Zahns und/oder zum formschlüssigen Einbringen in eine Ausnehmung oder Nut eines Stators eines Elektromotors ausgebildet werden. Demnach kann die Spule, nicht wie bei den herkömmlichen Herstellungsverfahren für Spulen, unabhängig von dem Zahn oder der Nut des Stators ausgebildet werden, und nach Fertigstellung der Spule in die Nut bzw. Nuten, den Zahn an seinen Seitenflächen umgebend, eingesetzt werden. Es ist daher nicht mehr erforderlich, dass die Spule unmittelbar am Stator, durch Umwickeln des Zahns mit dem elektrischen Leiter oder Einlegen des elektrischen Leiters in die Nut, hergestellt wird.

Die erfindungsgemäße Spule für eine elektromechanische Maschine, insbesondere Elektromotor oder dergleichen, ist durch einen elektrischen Leiter ausgebildet, wobei der elektrische Leiter mit einer Mehrzahl von um eine Spulenlängsachse verlaufenden Windungen angeordnet ist, wobei die Windungen der Spule in eine Richtung der Spulenlängsachse fortlaufend angeordnet sind, wobei eine Querschnittsfläche des elektrischen Leiters im Verlauf der Windungen entlang der Spulenlängsachse konstant bzw. unverändert groß ist, wobei die Spule durch ein Umformen des elektrischen Leiters ausgebildet ist, wobei eine Geometrie der Querschnittsfläche des elektrischen Leiters im Verlauf der Windungen entlang der Spulenlängsachse zumindest abschnittsweise kontinuierlich verändert ausgebildet ist, und wobei der elektrische Leiter in einem ersten Verfahrensschritt in eine Spulenvorform mit der Geometrie der Querschnittsfläche der Spule ausgebildet ist.

Hinsichtlich der Vorteilsbeschreibung der Merkmale der erfindungsgemäßen Spule wird auf die Merkmalsbeschreibung des erfindungsgemäßen Verfahrens verwiesen. Weitere, vorteilhafte Ausführungsformen der Spule ergeben sich aus den Merkmalen der auf das erfindungsgemäße Verfahren rückbezogenen Unteransprüche.

Die erfindungsgemäße elektromechanische Maschine, insbesondere Elektromotor, Drehstrommotor, Generator oder dergleichen, umfasst eine Mehrzahl von Spulen nach Anspruch 17. Vorzugsweise ist der Elektromotor als permanentmagneterregte Synchronmaschine mit mindestens einem Rotor und einem Stator ausgebildet. In dem Stator sind Vorsprünge bzw. Zähne im Wechsel mit Ausnehmungen bzw. Nuten ausgebildet, die in Richtung einer Rotationsachse des Elektromotors verlaufen. In den Ausnehmungen bzw. Nuten sind erfindungsgemäße Spulen eingesetzt, die jeweils zumindest einen Vorsprung bzw. Zahn zumindest Abschnittsweise dicht anliegend umgeben. Die Spulen sind vorzugsweise dabei immer im Wesentlichen identisch ausgebildet.

Nachfolgend wird eine bevorzugte Ausführungsform der Erfindung unter Bezugsnahme auf die beigefügten Zeichnungen näher erläutert.

Es zeigen:
- **Fig. 1**: Eine Schnittansicht eines Stators eines Elektromotors mit einer schematisch dargestellten Spule;
- **Fig. 2**: eine Schnittansicht eines Stators eines Elektromotors mit einer Spule nach dem Stand der Technik;
- **Fig. 3**: eine Schnittansicht eines Stators eines Elektromotors mit einer weiteren Spule aus dem Stand der Technik;
- **Fig. 4**: eine vergrößerte Schnittansicht der Spule aus **Fig. 1**;
- **Fig. 5**: eine weitere Ausführungsform einer Spule in einer perspektivischen Ansicht;
- **Fig. 6**: eine Draufsicht der Spule aus **Fig. 5**;
- **Fig. 7**: eine Schnittansicht der Spule aus **Fig. 6** entlang einer Linie VII-VII;
- **Fig. 8**: eine Schnittansicht der Spule aus **Fig. 6** entlang einer Linie VIII-VIII;
- **Fig. 9**: eine Schnittansicht eines Stators eines Elektromotors mit einer weiteren Spule;
- **Fig. 10**: eine Ausführungsform einer Spulenvorform in einer perspektivischen Ansicht.

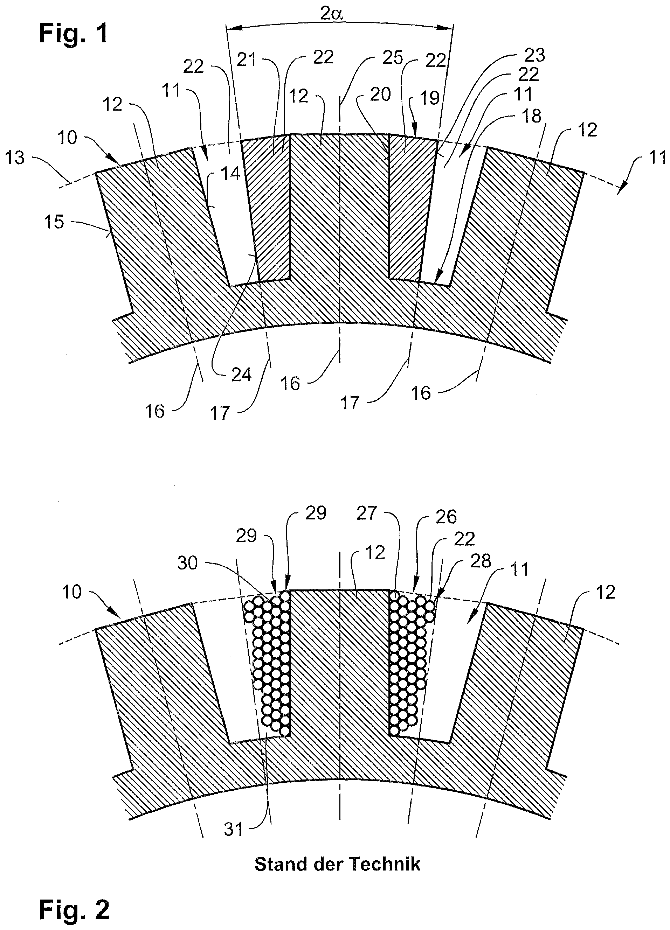

Die **Fig. 1** zeigt eine Teilschnittansicht eines Stators 10 eines hier nicht näher dargestellten Elektromotors, wobei eine Schnittebene orthogonal zu einer hier ebenfalls nicht sichtbaren Rotationsachse des Elektromotors verläuft. Der Stator 10 weist eine Mehrzahl von Nuten 11 und Zähnen 12 auf, die in axialer Richtung der Rotationsachse des Elektromotors verlaufen und sich von der Rotationsachse weg, in einer distalen Richtung erstrecken. Die Nuten 11 und die Zähne 12 sind jeweils im Wechsel um einen Umfang 13 des Stators 10 ausgebildet. Die Zähne 12 weisen dabei parallele Seitenflächen 14 und 15 auf, die folglich parallel zu einer Zahnsymmetrieebene 16 verlaufen. Die Nuten 11 sind jeweils zwischen den Seitenflächen 14 und 15 benachbarter Zähne 12 ausgebildet, wobei die Seitenflächen 14 und 15 der Nuten 11 relativ zu einer Nutsymmetrieebene 17 in einem Winkel α verlaufen. Die Zahnsymmetrieebenen 16 und die Nutsymmetrieebenen 17 verlaufen jeweils so, dass sie sich in der Rotationsachse des Elektromotors schneiden. Die Nuten 11 werden weiter durch eine Bodenfläche 18 begrenzt, sodass die Nuten 11 jeweils in der gezeigten Querschnittsansicht eine kegelstumpfförmige Querschnittsgeometrie und die Zähne 12 eine im Wesentlichen rechteckige Querschnittsgeometrie aufweisen.

Weiter ist in **Fig. 1** eine Spule 19 in der beschriebenen Schnittansicht schematisch dargestellt, ohne dass Windungen der Spule bzw. ein elektrischer Leiter näher ersichtlich ist. Die Spule 19 umgibt den Zahn 12 derart, dass sich eine Innenumfangsfläche 20 der Spule 19 dicht an die Seitenflächen 14 und 15 des Zahns 12 anschmiegt und diese im Wesentlichen bedeckt. Leitermaterial 21 der Spule 19 füllt dabei in jeweils benachbarten Nuten 11 einen Nutspalt 22 aus, der von der Seitenfläche 14, der Bodenfläche 18 und der Nutsymmetrieebene 17 bzw. der Seitenfläche 15, der Bodenfläche 18 und der Nutsymmetrieebene 17 jeweils begrenzt wird. Die Seitenflächen 23 und 24 der Spule 19 liegen somit jeweils in der Nutsymmetrieebene 17, sodass die Seitenflächen 23 und 24 relativ zueinander einen Winkel von 2α ausbilden. Dabei ist eine Breite der Spule 19 an den Seitenflächen 23 und 24 in radialer Richtung relativ zur Rotationsachse verjüngt. Die übrigen Zähne 12 werden bei einem vollständig montierten Elektromotor ebenfalls von hier nicht gezeigten Spulen 19 umgeben, sodass die Nuten 11 von jeweils zwei Spulen 19 vollständig ausgefüllt sind. Die Seitenflächen 23 und 24 der jeweiligen über den Umfang 13 verteilten, aufeinanderfolgenden Spulen 19 liegen dabei dicht aneinander an. Eine Spulenlängsachse 25 verläuft in der Zahnsymmetrieebene 16 jeweils in radialer Richtung relativ zur Rotationsachse orthogonal.

Die **Fig. 2** zeigt den Stator 10 aus **Fig. 1** zusammen mit einer Spule 26 nach dem Stand der Technik in einer Querschnittsansicht. Die Spule 26 ist dabei in Nutspalten 22 aufeinanderfolgender Nuten 11, einen Zahn 12 umgebend, angeordnet. Die Spule 26 ist aus einem Runddraht 27, der einen elektrischen Leiter 28 ausbildet, gewickelt, wobei der Runddraht 27 in hier nicht näher ersichtlichen Windungen um den Zahn 12 herumgeführt ist. Da der Runddraht 27 vergleichsweise dünn ist, ist er in mehreren Wickellagen 29 angeordnet, wobei der Runddraht 27 in den Wickellagen 29 relativ zueinander um jeweils einen halben Drahtdurchmesser versetzt angeordnet ist. Trotz der kompakten Wicklung der Spule 26 sind Luftzwischenräume 30 zwischen den Wickellagen 29 und dem Runddraht 27 vorhanden. Auch müssen Luftzwischenräume 31 vorgesehen werden, damit eine benachbarte, hier nicht näher dargestellte Spule 26 am nächstfolgenden Zahn 12 montiert werden kann. Ein Nutfüllfaktor, das heißt, das Verhältnis einer elektrisch leitenden Querschnittsfläche der Spule 26 relativ zu einer Querschnittsfläche einer Nut 11, beträgt hier im besten Fall 70 %.

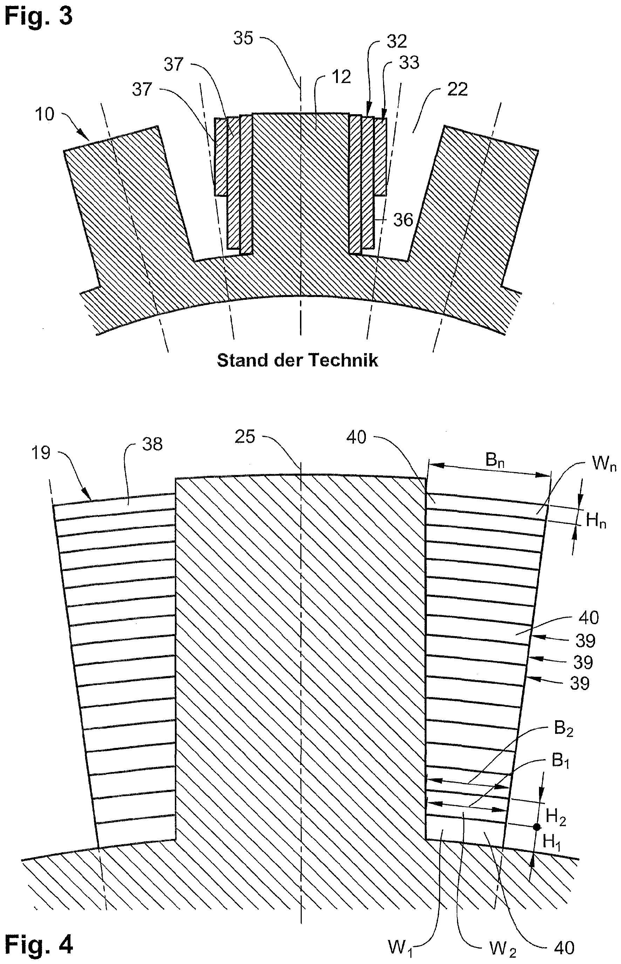

Die **Fig. 3** zeigt eine weitere Querschnittsdarstellung einer Spule 32 nach dem Stand der Technik an dem Stator 10 aus **Fig. 1****.** Die Spule 32 ist hier aus einem Rechteckdraht 33 als ein elektrischer Leiter 34 ausbildet. Der Rechteckdraht 33 ist spiralförmig um eine Spulenlängsachse 35 bzw. den Zahn 12 herum gewickelt. Weiter sind Luftzwischenräume 36 vorgesehen, sodass die Spule 32 eine Montage hier nicht gezeigter, benachbarter Spulen 32 ermöglicht. Infolgedessen ist eine Querschnittsfläche 37 des elektrischen Leiters 34 in der hier gezeigten Querschnittsansicht je nach Lage des Rechteckdrahts 33 im Nutspalt 22 unterschiedlich groß ausgebildet. Aufgrund der Luftzwischenräume 36 kann auch hier kein befriedigender Nutfüllfaktor erzielt werden. Weiter ist die sich entlang des elektrischen Leiters 34 verändernde Querschnittsfläche 37 nachteilig hinsichtlich einer gleichmäßigen Stromdichteverteilung der Spule 32.

Die **Fig. 4** zeigt eine vergrößerte Schnittansicht der Spule 19 zusammen mit dem Zahn 12 aus **Fig.1****.** Die Spule 19 ist aus einem elektrischen Leiter 38 gebildet, wobei der elektrische Leiter 38 in einer Mehrzahl von Windungen 39 um den Zahn 12 bzw. die Spulenlängsachse 25 herumgeführt ist. Es ist dabei eine Anzahl Windungen 39 von W₁ bis Wₙ vorgesehen. Die Windungen 39 W₁ bis Wₙ weisen eine elektrisch wirksame Querschnittsfläche 40 des elektrischen Leiters 34 auf, die über den gesamten Verlauf des elektrischen Leiters 34 gleich groß bzw. konstant ausgebildet ist. Weiter variiert eine Geometrie der jeweiligen Querschnittsfläche 40 im Verlauf der Windungen 39 W₁ bis Wₙ. Bezogen auf die hier gezeigte Darstellungsebene weist die Windung 39 W₁ eine Höhe H₁ und eine Breite B₁ auf, wohingegen eine Windung 39 Wₙ eine Höhe Hₙ und eine Breite Bₙ aufweist. Die Höhe H₁ ist größer als die Höhe Hₙ, wohingegen die Breite B₁ kleiner ausgebildet ist, als die Breite Bₙ. Die jeweiligen Breiten B der Windungen 39 sind demnach an eine Breite des Nutspalts 22 angepasst, wobei die jeweiligen Höhen H der Windungen 39 so gewählt sind, dass die Querschnittsflächen 40 immer gleich groß bzw. konstant ausgebildet sind. So ist es möglich einen Nutfüllfaktor von über 90 % mit der Spule 19 zu erzielen.

Die Spule 19 wurde durch ein Umformen bzw. Ausbilden des elektrischen Leiters 38 bzw. einer Geometrie der Querschnittsfläche 40 des elektrischen Leiters 38 im Verlauf der Windungen 39 entlang der Spulenlängsachse 25 ausgebildet, wobei die Geometrie der Querschnittsfläche 40 hinsichtlich Höhe H und Breite B regelmäßig verändert ausgebildet wurde.

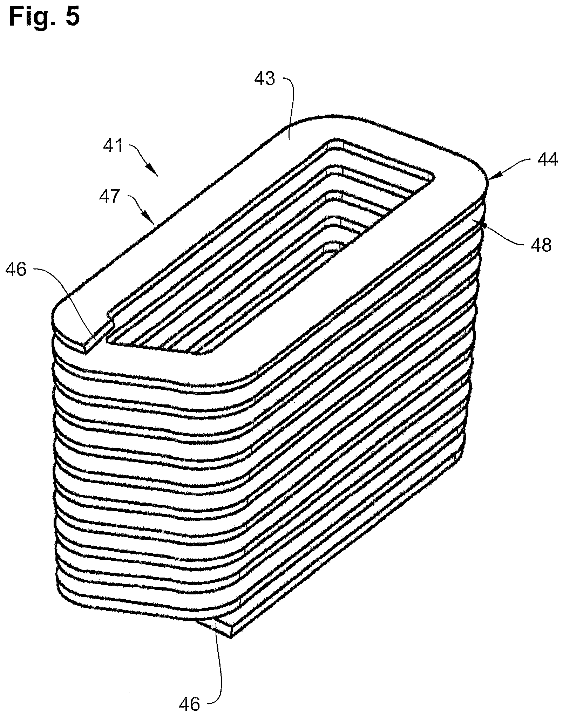

Eine Zusammenschau der **Fig. 5** bis **8** zeigt eine weitere Ausführungsform einer Spule 41 für einen hier nicht näher dargestellten Elektromotor bzw. Stator. Die Spule 41 ist so ausgebildet, dass sie wie zuvor ausgeführt, in Nuten des Stators so einsetzbar ist, dass ein Zahn des Stators von der Spule 41 vollständig umgeben ist. Der Zahn des Stators füllt dann eine Durchgangsöffnung 42 der Spule 41 vollständig aus. Die Spule 41 wird ausgehend von einem kalt verformten, aus Reinkupfer bestehenden Runddraht durch Umformen des Runddrahtes hergestellt. Zunächst erfolgt ein Wickeln des Runddrahtes auf einen Dorn, um eine Geometrie der Spule 41 vorzuformen. Der Dorn hat dabei im Wesentlichen eine mit der Durchgangsöffnung 42 übereinstimmende Rechteckform. Nachfolgend wird ein aus dem Runddraht gebildeter elektrischer Leiter 43 mittels Gesenkformen ausgebildet. Das Gesenkformen erfolgt derart, dass jeweils eine Windung 44 mittels einer hier nicht gezeigten Gesenkform ausgebildet wird, wobei für die Windungen 44 W₁ bis Wₙ jeweils unterschiedliche Gesenkformen verwendet werden. Dies ist erforderlich, da durch das Gesenkformen eine relativ zu einer Spulenlängsachse 45 ausgebildete Höhe H einer Querschnittsfläche 46 des elektrischen Leiters 43 entlang des elektrischen Leiters 43 abnimmt und eine in radialer Richtung der Spulenlängsachse 45 ausgebildete Breite B der Querschnittsfläche 46 gleichzeitig zunimmt. Bei dem hier gezeigten Ausführungsbeispiel variiert das Verhältnis von Breite B zur Höhe H im Bereich von 5 zu 1 bis 10 zu 1.

Nach dem Gesenkformen des Runddrahtes bzw. des elektrischen Leiters 43 wird eine Spulenvorform 47 erhalten, wie sie in **Fig. 5** dargestellt ist. Die vorbeschriebene Geometrie der Querschnittsfläche 46 ist hier bereits ausgebildet, wobei die Windungen 44 W₁ bis Wₙ noch voneinander durch einen Zwischenraum 48 beabstandet sind und sich nicht berühren. Nun wird in einem zweiten Verfahrensschritt die Spulenvorform 47 mit einem Isolationsmaterial, welches hier nicht ersichtlich ist, beschichtet.

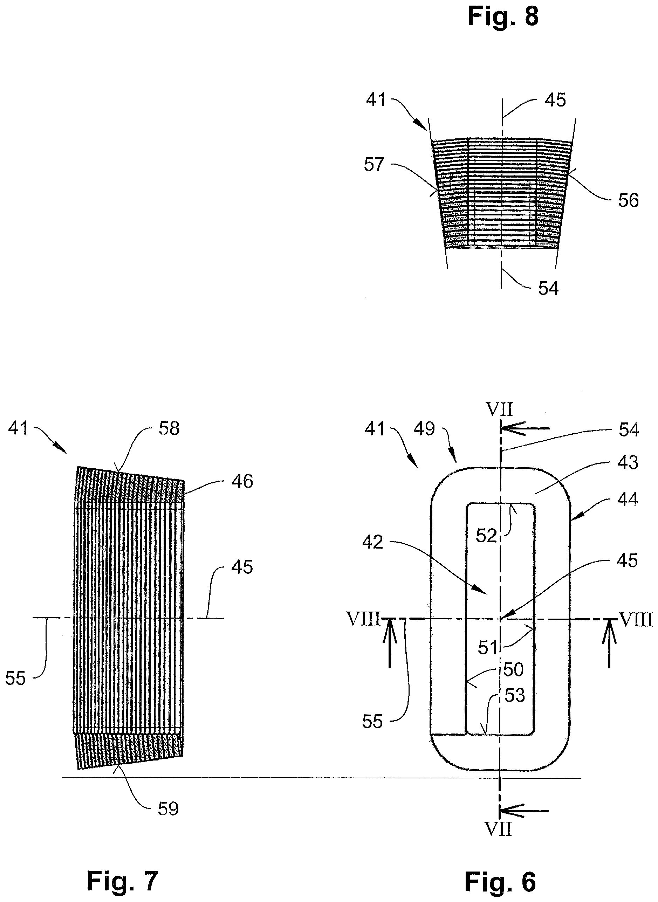

Nach dem Beschichten wird die Spule 41 in Richtung der Spulenlängsachse 45 gestaucht, sodass eine in den **Fig. 6** bis **8** gezeigte Spulenendform 49 erhalten wird. Die Windungen 44 W₁ bis Wₙ liegen nun dicht aneinander an, wobei aufgrund der Beschichtung mit Isolationsmaterial diese voneinander elektrisch isoliert sind. Die Spule 41 wird nun auf den hier nicht gezeigten Zahn aufgeschoben, wobei relativ zueinander gegenüberliegende Innenumfangsflächen 50 und 51 sowie 52 und 53 der Spule 41 jeweils zueinander parallel ausgebildet sind. In den hier gezeigten Darstellungen entspricht eine Längsschnittebene 54 sowie eine Querschnittsebene 55 der Spule 41 jeweils einer Symmetrieebene des Zahns. Insbesondere die Längsschnittebene 54 fluchtet dann mit Längsschnittebenen weiterer hier nicht gezeigter Spulen 41 in einer Rotationsachse des Elektromotors. Von Außenumfangsflächen 56 bis 59 der Spule 41 sind die im Wesentlichen gegenüberliegenden Außenumfangsflächen 56 und 57 so ausgebildet, dass sie mit übereinstimmend ausgebildeten Außenumfangsflächen 56 bzw. 57 weiterer Spulen 41 jeweils in einer Nut dicht zur Anlage gelangen können. Somit ist es möglich mit der beschriebenen Geometrie der Spule 41 einen besonders hohen Nutfüllfaktor von über 90 % zu erzielen. Die Außenumfangsflächen 56 und 57 liegen in einer hier jeweils nicht gezeigten Nutsymmetrieebene, wobei sich die Nutsymmetrieebenen in der Rotationsachse des Elektromotors schneiden.

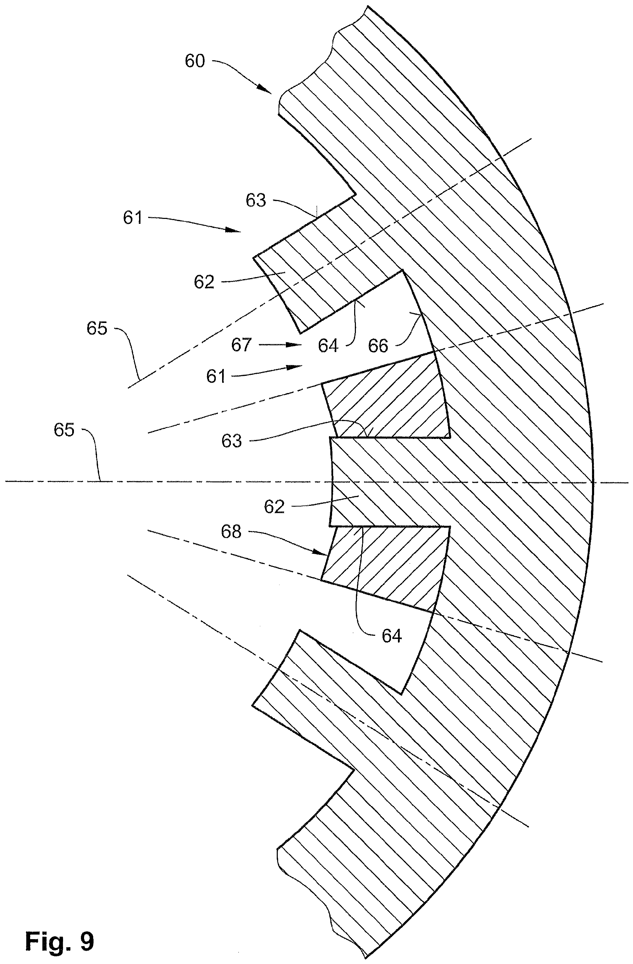

Die **Fig. 9** zeigt eine Teilschnittansicht eines Stators 60 eines hier nicht näher dargestellten Elektromotors, wobei eine Schnittebene orthogonal zu einer hier ebenfalls nicht sichtbaren Rotationsachse des Elektromotors verläuft. Der Stator 60 weist eine Mehrzahl von Nuten 61 und Zähnen 62 auf, die in axialer Richtung der Rotationsachse des Elektromotors verlaufen und sich zu der Rotationsachse hin, in einer proximalen Richtung erstrecken. Die Zähne 62 weisen dabei parallele Seitenflächen 63 und 64 auf, die folglich parallel zu einer Zahnsymmetrieebene 65 verlaufen. Die Zahnsymmetrieebenen 65 schneiden sich in der Rotationsachse des Elektromotors. Die Nuten 61 sind jeweils zwischen den Seitenflächen 63 und 64 benachbarter Zähne 62 ausgebildet. Die Nuten 61 werden weiter durch eine Bodenfläche 66 begrenzt, sodass die Nuten 61 jeweils in der gezeigten Querschnittsansicht eine kegelstumpfförmige Querschnittsgeometrie und die Zähne 62 eine im Wesentlichen rechteckige Querschnittsgeometrie aufweisen. Die Bodenfläche 66 ist insbesondere breiter als eine Öffnung 67 der Nut 61.

Weiter ist in **Fig. 9** eine Spule 68 in der beschriebenen Schnittansicht schematisch dargestellt, ohne dass Windungen der Spule bzw. ein elektrischer Leiter näher ersichtlich ist. Eine Breite der Spule 68 ist an den Seitenflächen 63 und 64 in radialer Richtung relativ zur Rotationsachse verbreitert.

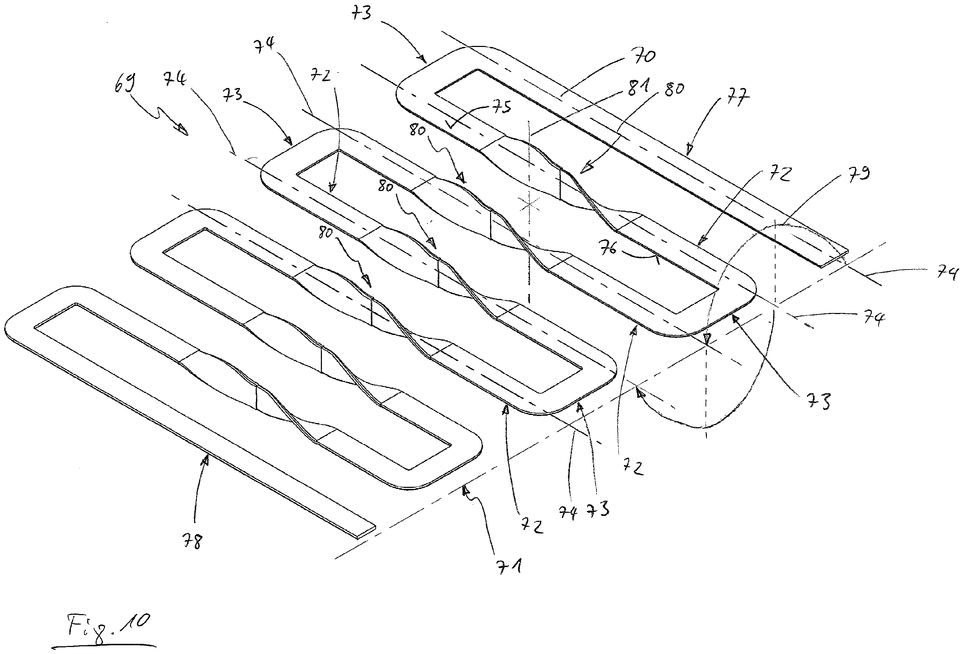

Die in den Fig. **1****,** **4** bis **9** gezeigten Spulen sind prinzipiell auch durch Herstellung der in der **Fig. 10** dargestellten Spulenvorform 69 ausbildbar. Die Spulenvorform 69 wird durch Gießen von Kupfer oder Aluminium in eine hier nicht näher dargestellte Gießform, vorzugsweise eine Dauerform, ausgebildet. Die Spulenvorform umfasst einen elektrischen Leiter 70, dessen Querschnittsfläche konstant ist, wobei sich eine Geometrie der Querschnittsfläche kontinuierlich verändert. Die Spulenvorform 69 ist im Wesentlichen so ausgebildet, dass sie sich in einer Formebene 71 erstreckt. Der Leiter 70 verläuft dabei mäanderförmig in der Formebene 71 und bildet keine geschlossene Windung und damit keine Spule aus. Der Leiter 70 weist lange Windungsabschnitte 72 und kurze Windungsabschnitte 73 auf, wobei die langen Windungsabschnitte 72 relativ zueinander ausgebildet sind. Entsprechend Längsachsen 74 der langen Windungsabschnitte 72 verlaufen ebenfalls relativ zueinander parallel in der Formebene 71. In einem langen Windungsabschnitt 72 ist der Leiter 70 derart ausgeformt, dass relativ zur Formebene 71 eine Oberseite 75 des Windungsabschnittes 72 im Verlauf des Windungsabschnittes 72 entlang der Längsachse 74 zu einer Unterseite 76 des Windungsabschnittes 72 wird um umgekehrt. Der Windungsabschnitt 72 ist somit um 180° verdreht relativ zu seiner Längsachse 74 ausgebildet, wobei sämtliche langen Windungsabschnitte 72 hinsichtlich ihrer Verdrehung übereinstimmend ausgebildet sind. Lediglich Enden 77 und 78 des Leiters 70 sind nicht verdreht ausgebildet. Das Umformen der Spulenvorform 69 zu der Spule bzw. Spulenendform erfolgt dann durch ein Biegen des Endes 77 in Richtung eines hier angedeuteten Pfeils 79, sodass eine geometrisch ausgebildete Verdrehung 80 des Windungsabschnittes 72 in der Längsachse 74 aufgehoben wird und ein vollständig ebener, langer Windungsabschnitt 72 erhalten wird. Auch die übrigen vorgeformten Verdrehungen 80 der Windungsabschnitte 72 werden um eine entsprechende Drehung um 180° aufgelöst, sodass in Folge des Umformens eine hier noch nicht dargestellte Spule mit einer Spulenlängsachse 81, die orthogonal durch die Formebene 71 verläuft, entsteht.

## Patentansprüche

1. Verfahren zur Herstellung einer Spule (19, 41, 68) für eine elektromechanische Maschine, insbesondere Elektromotor oder dergleichen, wobei die Spule (19, 41, 68) durch Anordnung eines elektrischen Leiters (38, 43, 70) ausgebildet wird, wobei der elektrische Leiter (38, 43, 70) mit einer Mehrzahl von um eine Spulenlängsachse (25, 45, 81) verlaufenden Windungen (39, 44) angeordnet wird, wobei die Windungen (39, 44) der Spule (19, 41, 68) in einer Richtung der Spulenlängsachse (25, 45, 81) fortlaufend angeordnet werden, wobei eine Querschnittsfläche (40, 46) des elektrischen Leiters (38, 43. 70) im Verlauf der Windungen (39, 44) entlang der Spulenlängsachse (25, 45, 81) konstant ausgebildet wird, wobei zur Ausbildung der Spule (19, 41, 68) ein Umformen des elektrischen Leiters (38, 43, 70) erfolgt, wobei eine Geometrie der Querschnittsfläche des elektrischen Leiters (38, 43, 70) im Verlauf der Windungen (39, 44) entlang der Spulenlängsachse (25, 45, 81) zumindest abschnittsweise kontinuierlich verändert ausgebildet wird,
**dadurch gekennzeichnet,**
**dass** der elektrische Leiter (38, 43, 70) in einem ersten Verfahrensschritt in eine Spulenvorform (47, 69) mit der Geometrie der Querschnittsfläche (40, 46) der Spule (19, 41, 68) ausgebildet wird, wobei in dem ersten Verfahrensschritt der elektrische Leiter (38, 43, 70) mittels Gießen ausgebildet wird, wobei der elektrisehe Leiter (38, 43, 70) in einem weiteren Verfahrensschritt in eine Spulenendform (49) der Spule (19, 41, 68) umgeformt wird.

2. Verfahren nach Anspruch 1,
**dadurch gekennzeichnet,**
**dass** bei dem Gießen die Geometrie der der Querschnittsfläche (40, 46) des elektrischen Leiters (38, 43, 70) ausgebildet wird.

3. Verfahren nach Anspruch 1 oder 2,
**dadurch gekennzeichnet,**
**dass** die Spulenvorform (69) sich im wesentlichen in einer Formebene (71) erstreckend ausgebildet wird.

4. Verfahren nach Anspruch 3,
**dadurch gekennzeichnet,**
**dass** in dem weiteren Verfahrensschritt ein geradförmiger, paralleler Windungsabschnitt (72, 73) einer Windung (39, 44) relativ bezogen auf eine Längsachse des Windungsabschnittes (72, 73) um 180° verdreht wird, derart, dass der Windungsabschnitt (72, 73) plan ausgebildet wird.

5. Verfahren nach Anspruch 4,
**dadurch gekennzeichnet,**
**dass** in der Formebene (71) benachbarte Windungsabschnitte (72, 73) jeweils um ihre Längsachse (74) verdreht werden, derart, dass die Spule (19, 41, 68) ausgebildet wird.

6. Verfahren nach einem der vorangehenden Ansprüche,
**dadurch gekennzeichnet,**
**dass** der elektrische Leiter (38, 43, 70) in einem zweiten Verfahrensschritt nach dem Umformen in die Spulenvorform (47, 69) mit einem Isolationsmaterial beschichtet wird.

7. Verfahren nach einem der vorangehenden Ansprüche,
**dadurch gekennzeichnet,**
**dass** das Umformen in zumindest einem Verfahrensschritt durch Halbwarmumformen oder Warmumformen eines Leitermaterials des elektrischen Leiters (38, 43, 70) erfolgt, wobei als Leitermaterial vorzugsweise Kupfer, eine Kupferlegierung, Aluminium oder eine Aluminiumlegierung verwendet wird.

8. Verfahren nach einem der vorangehenden Ansprüche,
**dadurch gekennzeichnet,**
**dass** eine Wärmebehandlung des elektrischen Leiters (38, 43, 70) vor, während und/oder nachfolgend dem Umformen durchgeführt wird, wobei durch die Wärmebehandlung eine Oxidschicht gebildet wird, wobei die Oxidschicht als eine elektrische Isolationsschicht verwendet wird.

9. Verfahren nach einem der vorangehenden Ansprüche,
**dadurch gekennzeichnet,**
**dass** die Geometrie der Querschnittsfläche (40, 46) trapezförmig oder rechteckig ausgebildet wird.

10. Verfahren nach Anspruch 9,
**dadurch gekennzeichnet,**
**dass** relativ zur Spulenlängsachse (25, 45, 81) eine in axialer Richtung der Spulenlängsachse (25, 45, 81) ausgebildete Höhe (H) der Querschnittsfläche (40, 46) entlang einer Richtung einer Erstreckung des elektrischen Leiters (38, 43, 70) abnimmt, und eine in radialer Richtung der Spulenlängsachse (25, 45, 81) ausgebildete Breite (B) der Querschnittsfläche (40, 46) in der Richtung der Erstreckung zunimmt.

11. Verfahren nach Anspruch 9 oder 10,
**dadurch gekennzeichnet,**
**dass** eine Breite (B) der Querschnittsfläche (40, 46) größer als eine Höhe (H) ausgebildet wird, wobei bevorzugt die Breite zumindest um einen Faktor zwei größer ausgebildet wird als die Höhe.

12. Verfahren nach einem der vorangehenden Ansprüche,
**dadurch gekennzeichnet,**
**dass** die Spule (19, 41, 68) zumindest abschnittsweise zum formschlüssigen Umfassen eines Vorsprungs oder Zahns (12, 62) und/oder zum formschlüssigen Einbringen in eine Ausnehmung oder Nut (11, 61) eines Stators (10, 60) eines Elektromotors ausgebildet wird.

13. Spule (19, 41, 68) für eine elektromechanische Maschine, insbesondere Elektromotor oder dergleichen, wobei die Spule (19, 41, 68) durch einen elektrischen Leiter (38, 43, 70) ausgebildet ist, wobei der elektrische Leiter (38, 43, 70) mit einer Mehrzahl von um eine Spulenlängsachse (25, 45, 81) verlaufenden Windungen (39, 44) angeordnet ist, wobei die Windungen (39, 44) der Spule (19, 41, 68) in einer Richtung der Spulenlängsachse (25, 45, 81) fortlaufend angeordnet sind, wobei eine Querschnittsfläche (40, 46) des elektrischen Leiters (38, 43, 70) im Verlauf der Windungen (39, 44) entlang der Spulenlängsachse (25, 45, 81) nahezu konstant ist, wobei die Spule (19, 41, 68) durch ein Umformen des elektrischen Leiters (38, 43, 70) ausgebildet ist, wobei eine Geometrie der Querschnittsfläche (40, 46) des elektrischen Leiters (38, 43, 70) im Verlauf der Windungen (39, 44) entlang der Spulenlängsachse (25, 45, 81) zumindest abschnittsweise kontinuierlich verändert ausgebildet ist,
**dadurch gekennzeichnet,**
**dass** der elektrische Leiter (38, 43, 70) in einem ersten Verfahrensschritt in eine Spulenvorform (47, 69) mit der Geometrie der Querschnittsfläche (40, 46) der Spule (19, 41, 68) ausgebildet ist, wobei in dem ersten Verfahrensschritt der elektrische Leiter (38, 43, 70) mittels Gießen ausgebildet ist, wobei der elektrische Leiter (38, 43, 70) in einem weiteren Verfahrensschritt in eine Spulenendform (49) der Spule (19, 41, 68) umgeformt ist.

14. Elektromechanische Maschine, insbesondere Elektromotor, Drehstrommotor, Generator oder dergleichen, umfassend eine Mehrzahl von Spulen (19, 41, 68) nach Anspruch 13.

## Claims

1. A method for producing a coil (19, 41, 68) for an electromechanical machine, in particular for an electric motor or the like, said coil (19, 41, 68) being formed by arranging an electric conductor (38, 43, 70), said electric conductor (38, 43, 70) being arranged with a plurality of windings (39, 44) running around a coil longitudinal axis (25, 45, 81), said windings (39, 44) of the coil (19, 41, 68) being arranged uninterruptedly in a direction of the coil longitudinal axis (25, 45, 81), a cross-section surface (40, 46) of the electric conductor (38, 43, 70) being formed so as to be uniform in the course of the windings (39, 44) along the coil longitudinal axis (25, 45, 81), the electric conductor (38, 43, 70) being worked for forming the coil (19, 41, 68), a geometry of the cross-section surface of the electric conductor (38, 43, 70) being formed so as to be continuously modified at least in some sections in the course of the windings (39, 44) along the coil longitudinal axis (25, 45, 81),
**characterised in that**
the electric conductor (38, 43, 70), in a first method step, is formed into a coil preform (47, 69) having the geometry of the cross-section surface (40, 46) of the coil (19, 41, 68), said electric conductor (38, 43, 70), in the first method step, being formed by casting, said electric conductor (38, 43, 70), in a further method step, being worked into a final coil form (49) of the coil (19, 41, 68).

2. The method according to claim 1,
**characterised in that**
the geometry of the cross-section surface (40, 46) of the electric conductor (38, 43, 70) is formed during the casting process.

3. The method according to claim 1 or 2,
**characterised in that**
the coil preform (69) is formed so as to substantially extend in a mould plane (71).

4. The method according to claim 3,
**characterised in that**
in the further method step, a straight parallel winding section (72, 73) of a winding (39, 44) is twisted by 180° in relation to a longitudinal axis of the winding section (72, 73), in such a manner that the winding section (72, 73) is formed so as to be planar.

5. The method according to claim 4,
**characterised in that**
in the mould plane (71), adjacent winding sections (72, 73) are twisted around their longitudinal axis (74) in each case, in such a manner that the coil (19, 41, 68) is formed.

6. The method according to any one of the preceding claims,
**characterised in that**
the electric conductor (38, 43, 70), in a second method step, is coated with an insulating material after having been worked into the coil preform (47, 69).

7. The method according to any one of the preceding claims,
**characterised in that**
the working is carried out in at least one method step by means of warm forming or hot forming of a conductor material of the electric conductor (38, 43, 70), preferably copper, a copper alloy, aluminium or an aluminium alloy being used as the conductor material.

8. The method according to any one of the preceding claims,
**characterised in that**
a heat treatment of the electric conductor (38, 43, 70) is performed before, during and/or after the working, an oxide layer being developed by the heat treatment, said oxide layer being used as an electric insulating layer.

9. The method according to any one of the preceding claims,
**characterised in that**
the geometry of the cross-section surface (40, 46) is formed so as to be trapezoidal or rectangular.

10. The method according to claim 9,
**characterised in that**
in relation to the coil longitudinal axis (25, 45, 81), a height (H) of the cross-section surface (40, 46) that is formed in the axial direction of the coil longitudinal axis (25, 45, 81) decreases along a direction of an extension of the electric conductor (38, 43, 70), and **in that** a width (B) of the cross-section surface (40, 46) that is formed in the radial direction of the coil longitudinal axis (25, 45, 81) increases in the direction of the extension.

11. The method according to claim 9 or 10,
**characterised in that**
a width (B) of the cross-section surface (40, 46) is realised so as to be greater than a height (H), the width preferably being realised so as to be greater than the height by at least a factor of two.

12. The method according to any one of the preceding claims,
**characterised in that**
the coil (19, 41, 68), at least in some sections, is realised for embracing a protrusion or tooth (12, 62) with positive locking and/or for being introduced with positive locking into a clearance or slot (11, 61) of a stator (10, 60) of an electric motor.

13. A coil (19, 41, 68) for an electromechanical machine, in particular for an electric motor or the like, said coil (19, 41, 68) being formed by means of an electric conductor (38, 43, 70), said electric conductor (38, 43, 70) being arranged with a plurality of windings (39, 44) running around a coil longitudinal axis (25, 45, 81), said windings (39, 44) of the coil (19, 41, 68) being arranged uninterruptedly in a direction of the coil longitudinal axis (25, 45, 81), a cross-section surface (40, 46) of the electric conductor (38, 43, 70) being almost uniform in the course of the windings (39, 44) along the coil longitudinal axis (25, 45, 81), said coil being formed by working the electric conductor, a geometry of the cross-section surface (40, 46) of the electric conductor (38, 43, 70) being formed so as to be continuously modified at least in some sections in the course of the windings (39, 44) along the coil longitudinal axis (25, 45, 81),
**characterised in that**
the electric conductor (38, 43, 70), in a first method step, is formed into a coil preform (47, 69) having the geometry of the cross-section surface (40, 46) of the coil (19, 41, 68), said electric conductor (38, 43, 70), in the first method step, being formed by casting, said electric conductor (38, 43, 70), in a further method step, being worked into a final coil form (49) of the coil (19, 41, 68).

14. An electromechanical machine, in particular an electric motor, a three-phase motor, an electric generator or the like, comprising a plurality of coils (19, 41, 68) according to claim 13.

## Revendications

1. Procédé de fabrication d'une bobine (19, 41, 68) pour une machine électromécanique, en particulier pour un moteur électrique ou d'autres choses semblables, ladite bobine (19, 41, 68) étant façonnée en disposant un conducteur électrique (38, 43, 70), ledit conducteur électrique (38, 43, 70) étant disposé avec une pluralité de spires (39, 44) passant autour d'un axe longitudinal de la bobine (25, 45, 81), lesdites spires (39, 44) de la bobine (19, 41, 68) étant disposées de manière continue dans une direction de l'axe longitudinal de la bobine (25, 45, 81), une surface de section transversale (40, 46) du conducteur électrique (38, 43, 70) étant façonnée de façon à être constant au cours des spires (39, 44) le long de l'axe longitudinal de la bobine (25, 45, 81), le conducteur électrique (38, 43, 70) étant déformé pour façonner la bobine (19, 41, 68), une géométrie de la surface de section transversale du conducteur électrique (38, 43, 70) au cours des spires (39, 44) le long de l'axe longitudinal de la bobine (25, 45, 81) étant façonnée de façon à être changée en continu au moins par sections,
**caractérisé en ce que**
le conducteur électrique (38, 43, 70) est façonné pour obtenir une préforme de bobine (47, 69) ayant la géométrie de la surface de section transversale (40, 46) de la bobine (19, 41, 68) lors d'une première étape de procédé, ledit conducteur électrique (38, 43, 70) étant façonné par coulée lors de la première étape de procédé, ledit conducteur électrique (38, 43, 70) étant déformé pour obtenir une forme finale de bobine (49) de la bobine (19, 41, 68) lors d'une autre étape de procédé.

2. Procédé selon la revendication 1,
**caractérisé en ce que**
la géométrie de la surface de section transversale (40, 46) du conducteur électrique (38, 43, 70) est façonnée pendant le processus de la coulée.

3. Procédé selon la revendication 1 ou 2,
**caractérisé en ce que**
la préforme de bobine (69) est façonnée à s'étendre essentiellement dans un plan de moule (71).

4. Procédé selon la revendication 3,
**caractérisé en ce que**
lors de l'autre étape de procédé, une section de spire (72, 73) droite parallèle d'une spire (39, 44) est tordue de 180° par rapport à un axe longitudinal de la section de spire (72, 73), de telle manière que la section de spire (72, 73) est façonnée à être plaine.

5. Procédé selon la revendication 4,
**caractérisé en ce que**
dans le plan de moule (71), des sections de spire (72, 73) adjacentes sont tordues autour de leur axe longitudinal (74) respectivement, de telle manière que la bobine (19, 41, 68) est façonnée.

6. Procédé selon l'une quelconque des revendications précédentes,
**caractérisé en ce que**
le conducteur électrique (38, 43, 70) est revêtu d'un matériau d'isolation dans une deuxième étape de procédé après la déformation pour obtenir la préforme de bobine (47, 69).

7. Procédé selon l'une quelconque des revendications précédentes,
**caractérisé en ce que**
la déformation est effectuée lors d'au moins une étape de procédé par voie de formage à mi-chaud ou par voie de formage à chaud d'un matériau conducteur du conducteur électrique (38, 43, 70), du cuivre, un alliage cuivreux, de l'aluminium ou un alliage aluminium étant utilisé comme le matériau conducteur.

8. Procédé selon l'une quelconque des revendications précédentes,
**caractérisé en ce qu'**
un traitement thermique du conducteur électrique (38, 43, 70) avant, pendant et/ou après la déformation est exécuté, une couche d'oxydes étant formée par voie du traitement thermique, ladite couche d'oxydes étant utilisée comme une couche d'isolation électrique.

9. Procédé selon l'une quelconque des revendications précédentes,
**caractérisé en ce que**
la géométrie de la surface de section transversale (40, 46) est façonnée à être trapézoïdale ou rectangulaire.

10. Procédé selon la revendication 9,
**caractérisé en ce que**
par rapport à l'axe longitudinal de la bobine (25, 45, 81), une hauteur (H) de la surface de section transversale (40, 46) qui est réalisée dans la direction axiale de l'axe longitudinal de la bobine (25, 45, 81) décroît le long d'une direction d'une extension du conducteur électrique (38, 43, 70), et **en ce qu'**une largeur (B) de la surface de section transversale (40, 46) qui est réalisée dans la direction radiale de l'axe longitudinal de la bobine (25, 45, 81) croît dans la direction de l'extension.

11. Procédé selon la revendication 9 ou 10,
**caractérisé en ce qu'**
une largeur (B) de la surface de section transversale (40, 46) est réalisée à être supérieure à une hauteur (H), la largeur de préférence étant réalisée à être supérieure à la hauteur d'au moins un facteur deux.

12. Procédé selon l'une quelconque des revendications précédentes,
**caractérisé en ce que**
la bobine (19, 41, 68) est réalisée, au moins par sections, à entourer par forme une saillie ou une denture (12, 62) et/ou à être introduite par forme dans une échancrure ou une rainure (11, 61) d'un stator (10, 60) d'un moteur électrique.

13. Bobine (19, 41, 68) pour une machine électromécanique, en particulier pour un moteur électrique ou d'autres choses semblables, ladite bobine (19, 41, 68) étant façonnée par voie d'un conducteur électrique (38, 43, 70), ledit conducteur électrique (38, 43, 70) étant disposé avec une pluralité de spires (39, 44) passant autour d'un axe longitudinal de la bobine (25, 45, 81), lesdites spires (39, 44) de la bobine (19, 41, 68) étant disposées de manière continue dans une direction de l'axe longitudinal de la bobine (25, 45, 81), une surface de section transversale (40, 46) du conducteur électrique (38, 43, 70) étant presque constant au cours des spires (39, 44) le long de l'axe longitudinal de la bobine (25, 45, 81), ladite bobine (19, 41, 68) étant façonnée en déformant le conducteur électrique (38, 43, 70), une géométrie de la surface de section transversale (40, 46) du conducteur électrique (38, 43, 70) au cours des spires (39, 44) le long de l'axe longitudinal de la bobine (25, 45, 81) étant façonnée de façon à être changée en continu au moins par sections,
**caractérisée en ce que**
le conducteur électrique (38, 43, 70) est façonné pour obtenir une préforme de bobine (47, 69) ayant la géométrie de la surface de section transversale (40, 46) de la bobine (19, 41, 68) lors d'une première étape de procédé, ledit conducteur électrique (38, 43, 70) étant façonné par coulée lors de la première étape de procédé, ledit conducteur électrique (38, 43, 70) étant déformé pour obtenir une forme finale de bobine (49) de la bobine (19, 41, 68) lors d'une autre étape de procédé.

14. Machine électromécanique, en particulier moteur électrique, moteur à courant triphasé, générateur ou d'autres choses semblables, comprenant une pluralité de bobines (19, 41, 68) selon la revendication 13.
